# EUROPEAN PATENT APPLICATION

(11) **EP 4 817 695 A2**
(43) Date of publication of application: **07.10.2026**
(21) Application number: 26199829.8
(22) Date of filing: 15.07.2024
(51) Int. Cl.: A63B 26/00

(54) **FIXING MEMBER**

(30) Priority: 12.10.2023 CN 202311326313; 21.12.2023 CN 202323493137 U; 22.12.2023 CN 202323528681 U; 09.01.2024 CN 202420048001 U; 19.03.2024 CN 202420539540 U; 26.04.2024 CN 202420890130 U; 05.06.2024 CN 202421277069 U; 06.06.2024 CN 202421292866 U
(62) Document number(s) of the earlier application(s) in accordance with Art. 76 EPC: 24806704.3 / 4 714 509
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); ZUO, Qianbin, Shenzhen, 518114 (CN); LIANG, Junjie, Shenzhen, 518114 (CN); CAI, Xing, Shenzhen, 518114 (CN); LAN, Qiu, Shenzhen, 518114 (CN); HE, Jinheng, Shenzhen, 518114 (CN); CHANG, Wenxin, Shenzhen, 518114 (CN)
(74) Representative: De Arpe Tejero, Manuel

(57) **Abstract**

A fixing member is provided. The fixing member includes an outer frame (g10), a clamping block (g20), and an adjusting and locking assembly (g30). An accommodating space (g110) is defined inside the outer frame (g10). At least part of the clamping block (g20) is movably disposed on an inner side of the outer frame (g10). The adjusting and locking assembly (g30) is configured to adjust the position of the clamping block (g20) relative to the outer frame (g10) and lock the clamping block (g20).

## Description

### TECHNICAL FIELD

The present disclosure relates to the technical field of fitness device accessories, and in particular, to a fixing member.

### BACKGROUND

When a fitness device is in use, a user interacts with the fitness device, utilizing the power of the fitness device or overcoming the resistance of the fitness device to perform exercise. In the related art, the fitness device usually needs to be fixed. The fixation of the device in the related art is relatively rigid, requiring a base to be provided for the fitness device, or the fitness device to be fixed on a dedicated gantry.

However, any mounting method can only accommodate a single mounting scenario or a limited number of mounting scenarios. For example, the installation of a gantry can be performed only within a frame of the gantry and cannot be performed away from the gantry. The installation expansion of the fitness device is limited and does not meet the increasingly diverse fitness needs of users.

### SUMMARY OF THE INVENTION

The present disclosure provides a fixing member that can adapt to increasingly diverse fitness needs of users.

A fixing member according to an embodiment of the present disclosure includes an outer frame, a clamping block, and an adjusting and locking assembly. An accommodating space is defined inside the outer frame. At least part of the clamping block is movably disposed on an inner side of the outer frame. The adjusting and locking assembly is configured to adjust the position of the clamping block relative to the outer frame and lock the clamping block.

Additional aspects and advantages of the present disclosure will be partly given in the following description, and will partly become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the following accompanying drawings.
FIG. 1 is a perspective structural view of a fixing member according to an embodiment of the present disclosure.
FIG. 2 is a perspective structural view of a fixing member according to another embodiment of the present disclosure.
FIG. 3 is a schematic diagram of a clamping block according to an embodiment of the present disclosure.
FIG. 4 is a connection schematic diagram of a frame unit according to an embodiment of the present disclosure.
FIG. 5 is an exploded structural view of a fixing member according to an embodiment of the present disclosure.
FIG. 6 is a sectional schematic diagram of a region of a quick-release structure according to an embodiment of the present disclosure.
FIG. 7 is a perspective structural view of an unlocking push button according to an embodiment of the present disclosure.
FIG. 8 is an exploded schematic diagram of an unlocking push button relative to a fixing member according to an embodiment of the present disclosure.
FIG. 9 is a schematic diagram of the cooperation between a locking elastic piece and a locking groove according to an embodiment of the present disclosure.
FIG. 10 is a side view of a locking elastic piece direction of a fixing member according to an embodiment of the present disclosure.
FIG. 11 is a horizontal sectional schematic diagram of a fixing member according to an embodiment of the present disclosure.
FIG. 12 is a schematic diagram of the cooperation between an unlocking button and a preloading block according to an embodiment of the present disclosure.
FIG. 13 is a horizontal sectional schematic diagram of a fixing member according to another embodiment of the present disclosure.
FIG. 14 is an exploded schematic diagram of an adjusting and locking assembly according to an embodiment of the present disclosure.

### DETAILED DESCRIPTION OF EMBODIMENTS

Embodiments of the present disclosure are described in detail below, and examples of the embodiments are shown in accompanying drawings, wherein the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "couple", "connect" should be understood broadly. For example, they may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact through an additional feature between them. Moreover, a first feature being "above", "upward", and "on" a second feature may include the first feature being directly above and obliquely above the second feature, or may only indicate that the first feature has a higher horizontal height than the second feature. A first feature being "below", "beneath" and "underneath" the second feature includes the first feature being directly below and obliquely below the second feature, or only indicates that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and materials, but those having ordinary skill in the art may be aware of the application of other processes and/or the use of other materials.

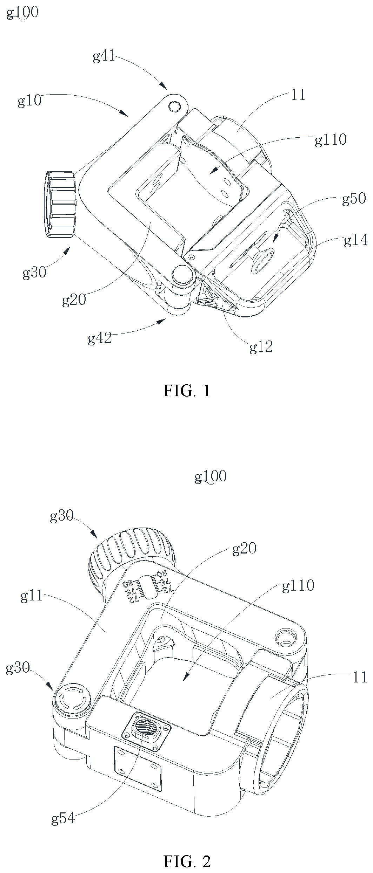

The present disclosure discloses a fixing member. Referring to FIG. 1 and FIG. 2, the fixing member may be a column fixing member g100. It should be noted that the fixing member in these embodiments can not only be fixed on a column in the external environment, but also can be fixed on a specified column provided by another fixing member. The fixing member includes an outer frame g10, a clamping block g20, and an adjusting and locking assembly g30. An accommodating space g110 is opened inside the outer frame g10, part or all of the clamping block g20 is movably disposed on an inner side of the outer frame g10. The adjusting and locking assembly g30 is configured to adjust the position of the clamping block g20 relative to the outer frame g10 and lock the clamping block g20.

In the fixing member g100 of the embodiment of the present disclosure, the adjusting and locking assembly g30 can adjust the position of the clamping block g20 relative to the outer frame g10 to control the size of the accommodating space g110 inside the outer frame g10, so that the fixing member g100 can be locked on frames with different cross-section sizes, and the operation is relatively simple. At the same time, the fitness device and massage device can be adapted to different types of frames through the fixing member g100, making replacement more convenient.

Specifically, the fixing member g100 can be configured to fix a fitness device. That is, the user can first clamp the fixing member g100 on the frame, and then assemble the fitness device on the fixing member g100, so that the user can use the fitness device for exercise. When the user wants to change the position for exercise, the user can move the fixing member g100 to a position where the user wants to exercise, so that the user can exercise in different positions quickly and conveniently.

The outer edge of the outer frame g10 can be set to a square structure or a circular structure, etc. The present disclosure does not limit the outer edge structure of the outer frame g10. A central region of the outer frame g10 is open through the outer frame g10 to form the accommodating space g110. The accommodating space g110 can be square, circular, or other shapes, adapted to the cross-sectional shape of the frame, so as to be clamped more tightly on the frame.

Part or all of the clamping block g20 is movably disposed inside the accommodating space g110, and the adjusting and locking assembly g30 is fixedly disposed on the outer frame g10. The clamping block g20 is connected and cooperated with the adjusting and locking assembly g30, so that the position of the clamping block g20 relative to the outer frame g10 can be adjusted under the adjustment of the adjusting and locking assembly g30, that is, the position of part or all of the clamping block g20 located in the accommodating space g110 is adjusted, thereby changing the size of the accommodating space g110, so that the accommodating space g110 fits the frame, and thus the fixing member g100 can be stably and firmly assembled on the frame.

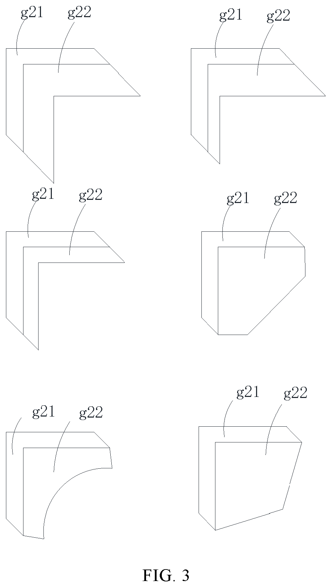

As shown in FIG. 3, it should be noted that the shape of the clamping block g20 toward an inner side of the accommodating space g110 can be angular, arc-shaped, convex, top block-shaped, groove-shaped, etc. It may be adapted to the shape of the accommodating space g110, or may not be adapted to the shape of the accommodating space g110, and thus can better cooperate with the outer frame g10 to clamp the frame.

The adjusting and locking assembly g30 may include any structure with an adjusting function, for example, a structure that pushes the clamping block g20 to move by rotating a screw, or a structure that drives the clamping block g20 to move by a telescopic rod, etc. The present disclosure does not limit the specific structure and adjustment method of the adjusting and locking assembly g30, as long as the adjusting and locking assembly g30 can adjust the position of the clamping block g20 relative to the outer frame g10 to lock the fixing member g100 on the frame.

Referring to FIG. 1, FIG. 2 and FIG. 4, in some embodiments, the outer frame g10 includes at least two frame units g11 connected in sequence. Adjacent frame units g11 are connected to each other via a hinge structure g41 or a quick-release structure g42. Two or more frame units g11 are connected end to end in sequence and enclose an accommodating space g110.

Thus, the outer frame g10 is connected by hinged or quick-release means using a plurality of frame units g11, making the installation and removal of the fixing member g100 relative to the frame more convenient and quick, while also making the outer frame g10 more compatible with the frame, thereby improving the user experience.

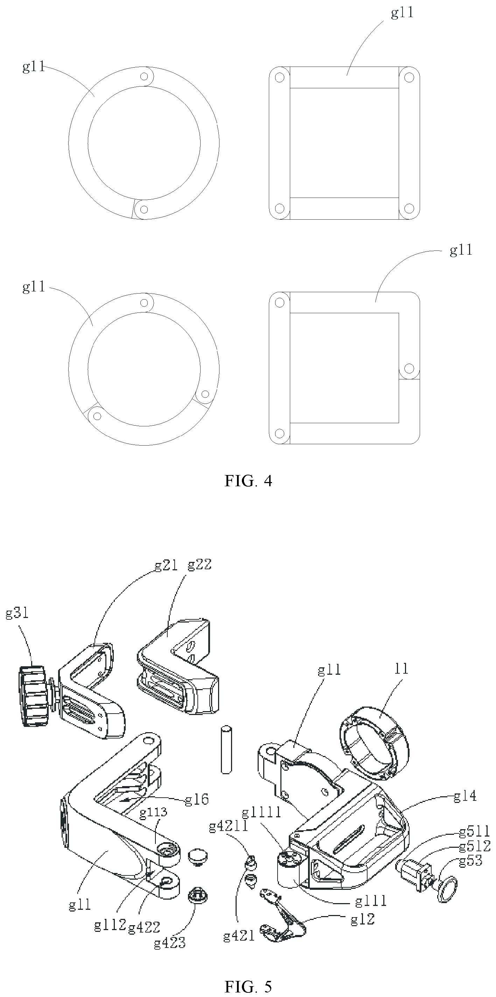

Specifically, the frame units of the outer frame g10 may include two, three or four, etc. At least two frame units are connected end to end in sequence to enclose an internal accommodating space g110. Two adjacent frame units can be hingedly connected using an axle pin structure or another structure, or can be quickly released using a lock catch or another structure. As shown in FIG. 4, for example, a circular accommodating space g110 is enclosed by two semicircular frame units g11; a rectangular accommodating space g110 is enclosed by two L-shaped frame units g11; a circular or elliptical accommodating space g110 is enclosed by a plurality of arc-shaped frame units g11; a rectangular accommodating space g110 is enclosed by a plurality of L-shaped frame units g11 and a plurality of long strip-shaped frame units g11, etc. Preferably, two adjacent frame units include at least one quick-release structure g42 for connection, so as to facilitate the installation and removal of the fixing member g100 on the frame.

In embodiments of the present disclosure, two outer frame units are taken as an example for description, but those having ordinary skill in the art will appreciate that the technical solutions in embodiments of the present disclosure are applicable to fixing members g100 with more frame units connected to each other. In the present disclosure, one end of the two frame units is hingedly connected by an axle pin structure, and the other end is connected by a quick-release structure g42.

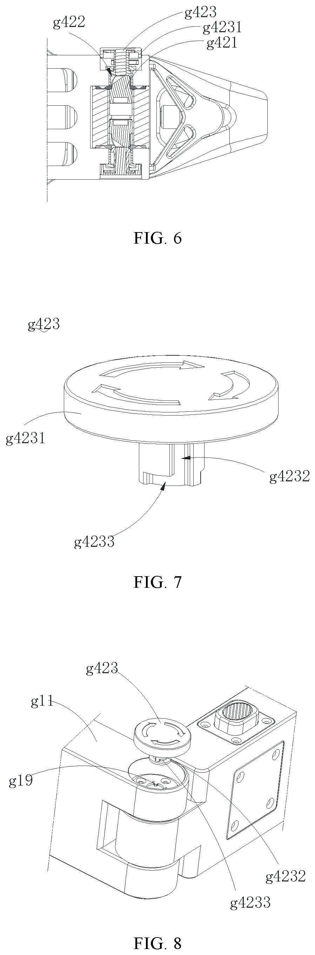

Referring to FIG. 5 and FIG. 6, in some embodiments, the quick-release structure g42 includes a retractable pin g421 and an insertion hole g422. The retractable pin g421 is provided at an end portion of a frame unit g11, and the retractable pin g421 is elastically ejected to the outside of the end portion of the frame unit g11. The insertion hole g422 is provided at an end portion of the adjacent frame unit g11, and the insertion hole g422 is arranged corresponding to the retractable pin g421. Directions of the insertion hole g422 and the retractable pin g421 are the same as a hinge direction of the two frame units g11.

Thus, when the retractable pin g421 is extended into the insertion hole g422, the two frame units g11 can be locked and connected; pressing the retractable pin g421 can retract the retractable pin g421, thereby controlling the connection between the retractable pin g421 and the insertion hole g422, so that connecting ends of the two frame units g11 are connected or separated, thereby realizing the quick disassembly of the fixing member.

Specifically, there are two retractable pins g421 with opposite ejection directions, which are respectively coupled to the two insertion holes g422 of the adjacent frame unit g11. The end portion of one frame unit g11 can be provided with a mounting portion g111, and the mounting portion g111 is provided with a through mounting hole g1111, and the two retractable pins g421 are mounted in the mounting hole g1111 opposite to each other. The two retractable pins g421 arranged opposite to each other can make the connection between adjacent frame units g11 more stable, and the user can press the two retractable pins g421 relative to each other to retract the two retractable pins g421 at the same time, making the operation more convenient.

Specifically, an elastic member may be provided in the mounting hole g1111, and the elastic member can elastically push the retractable pin g421 outward. When there are two retractable pins g421, the elastic member can provide an elastic force to simultaneously push the two retractable pins g421 out of the mounting hole g1111 in opposite directions.

Specifically, the end portion of the adjacent frame unit g11 is provided with two protruding portions g113 spaced apart to form a clearance space g112 therebetween. The clearance space g112 is adapted to the mounting portion g111, and the mounting portion g111 is disposed in the clearance space g112. Each of the two protruding portions g113 is provided with an insertion hole g422, and the shape of the insertion hole g422 is adapted to the shape of the retractable pin g421.

When the two frame units g11 need to be locked and connected, press the retractable pin g421 to retract the retractable pin g421 into the mounting hole g1111, then move the mounting portion g111 to the clearance space g112, and release the retractable pin g421 so that the retractable pin g421 pushes out of the mounting hole g1111 and extends into the insertion hole g422, thereby achieving the locking connection between the two frame units g11. Similarly, when the two frame units g11 need to be separated, press the retractable pin g421 to withdraw the retractable pin g421 from the insertion hole g422 and retract the retractable pin g421 into the mounting hole g1111, then move the mounting portion g111 out of the clearance space g112, thereby achieving the separation of the two frame units g11. Furthermore, the quick-release structure g42 of the embodiment of the present disclosure can realize the rapid locking and separation of the two frame units g11, simplifying the installation and disassembly of the fixing member g100, which is convenient and quick.

Referring to FIG. 5 and FIG. 6, in some embodiments, a guide slope g4211 is provided at an end portion of the retractable pin g421. The guide slope g4211 can be formed at the end portion of the retractable pin g421 extending out of the mounting hole g1111, and the guide slope g4211 can face the clearance space g112.

Thus, when the two frame units g11 need to be locked and connected, the mounting portion g111 can move toward the clearance space g112, so that the retractable pin g421 can be pressed back into the mounting hole g1111 directly through the cooperation of the clearance space g112 and the guide slope g4211, and the retractable pin g421 can be pressed back without actively pressing the retractable pin g421. When the retractable pin g421 moves to the insertion hole g422, the retractable pin g421 can be ejected and extend into the insertion hole g422, thereby achieving the locking of the two frame units g11.

Referring to FIG. 5 and FIG. 6, in some embodiments, an unlocking push button g423 is movably disposed in the insertion hole g422 for abutting against the retractable pin g421. The unlocking push button g423 can move between a first position in which the unlocking push button g423 presses the retractable pin g421 to retract and a second position in which the unlocking push button g423 contacts the retractable pin g421 when the retractable pin g421 is ejected.

Thus, the retractable pin g421 can be retracted into the mounting hole g1111 by pressing the unlocking push button g423 to achieve the rapid unlocking of the two frame units g11.

Specifically, the unlocking push button g423 is movably mounted in the insertion hole g422 and can slide between the first position and the second position in the insertion hole g422. When the unlocking push button g423 is in the first position, that is, when the unlocking push button g423 is pressed toward the retractable pin g421, the unlocking push button g423 can push the retractable pin g421 out of the insertion hole g422 and retract the retractable pin g421 into the mounting hole g1111. When the unlocking push button g423 is in the second position, that is, when the unlocking push button g423 is not pressed, the unlocking push button g423 is lifted under the abutment of the retractable pin g421, and the frame unit g11 is in a locked state or an unconnected state.

Referring to FIG. 7 and FIG. 8, in some embodiments, one of the insertion hole g422 and the unlocking push button g423 is provided, on a sliding-interface surface between the insertion hole g422 and the unlocking push button g423, with a compression groove g4232 extending in a generatrix direction and a rotation groove g4233 extending in a circumferential direction. The compression groove g4232 is in communication with the rotation groove g4233, and the other of the insertion hole g422 and the unlocking push button g423 is provided with a limiting protrusion g19. The limiting protrusion g19 is configured to slide in the compression groove g4232 or the rotation groove g4233. When the retractable pin g421 is inserted into the insertion hole g422, the limiting protrusion g19 is located in the rotation groove g4233.

Thus, the unlocking push button g423 can perform limited sliding through the cooperation of the compression groove g4232 and the limiting protrusion g19, and be locked and pressed through the cooperation of the rotation groove g4233 and the limiting protrusion g19, thereby preventing the unlocking push button g423 from being accidentally touched during fitness exercises, causing the frame unit g11 to be unlocked and causing harm to the user.

Specifically, the unlocking push button g423 can be a columnar structure and can rotate and move in the insertion hole g422.

In an embodiment, an outer wall of the unlocking push button g423 is provided with a compression groove g4232 and a rotation groove g4233 in communication with each other. The compression groove g4232 extends along a pressing direction of the unlocking push button g423, the rotation groove g4233 extends along a circumferential direction of the unlocking push button g423. The rotation groove g4233 is located at an end portion of the compression groove g4232 adjacent to the retractable pin g421. In other words, it can be understood that the communicating compression groove g4232 and rotation groove g4233 are opened in an "L" shape on the outer wall of the unlocking push button g423. Correspondingly, a limiting protrusion g19 is provided on an inner wall of the insertion hole g422, and the limiting protrusion g19 can extend into the compression groove g4232 and the rotation groove g4233.

When the limiting protrusion g19 is located in the compression groove g4232, with the cooperation of the limiting protrusion g19 and the compression groove g4232, the unlocking push button g423 can move vertically in the pressing direction. At this time, the unlocking push button g423 can be used normally to unlock the frame unit g11.

When the frame unit g11 is in the locked state, the limiting protrusion g19 is located at the end portion of the compression groove g4232 adjacent to the retractable pin g421, that is, the connection point between the compression groove g4232 and the rotation groove g4233. At this time, rotating the unlocking push button g423 causes the limiting protrusion g19 to move along the rotation groove g4233 in a direction away from the compression groove g4232, so that under the restriction of the limiting protrusion g19 and the rotation groove g4233, the unlocking push button g423 cannot be pressed, that is, the press-lock of the unlocking push button g423 is achieved, thereby avoiding accidental touching of the unlocking push button g423. When the position of the fixing member g100 needs to be changed, the unlocking push button g423 is rotated to move the limiting protrusion g19 back to the compression groove, so that the press-unlock can be achieved.

Of course, in another embodiment, the compression groove g4232 and the rotation groove g4233 can also be opened on the inner wall of the insertion hole g422, and the limiting protrusion g19 can be provided on the unlocking push button g423. The present disclosure does not limit whether the compression groove g4232, the rotation groove g4233, and the limiting protrusion g19 are specifically provided on the unlocking push button g423 or on the insertion hole g422.

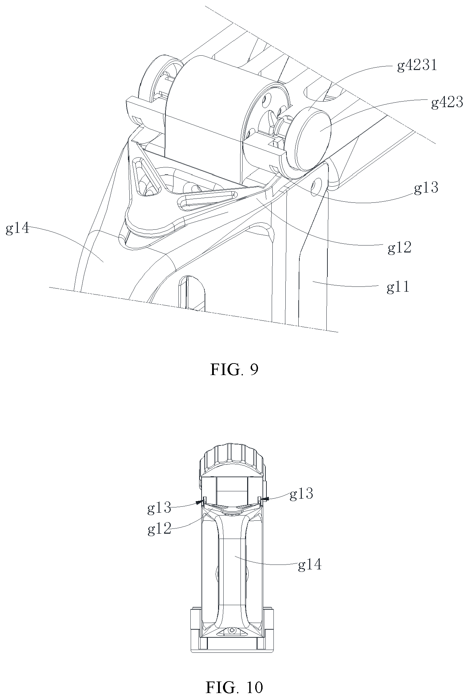

Referring to FIG. 9 and FIG. 10, in some embodiments, the frame unit g11 provided with the retractable pin g421 is also movably provided with a locking elastic piece g12, and a locking flange g4231 is provided on a peripheral side of the unlocking push button g423. When the retractable pin g421 is inserted into the insertion hole g422, the locking elastic piece g12 acts on the locking flange g4231 and prevents the unlocking push button g423 from pressing the retractable pin g421. The locking elastic piece g12 has an elastic force to rotate toward the locking flange g4231.

Thus, the unlocking push button g423 can be pressed and locked under the restriction of the locking elastic piece g12 and the locking flange g4231, providing a second layer of protection to prevent the frame unit g11 from being accidentally unlocked. When unlocking is required, only the locking elastic piece g12 needs to be pressed to allow the locking elastic piece g12 to overcome the elastic force and leave the locking flange g4231, and then the unlocking push button g423 can be pressed to unlock the connection of the frame unit g11.

Referring to FIG. 9 and FIG. 10, in some embodiments, the frame unit g11 with the insertion hole g422 is provided with a locking groove g13 in communication with the insertion hole g422, and part of the locking elastic piece g12 extends into the locking groove g13, and this part can interact with the locking flange g4231. By adding the locking groove g13 and making the locking elastic piece g12 move in the locking groove g13, the locking stability can be improved, and the installation space can be saved. Exemplarily, the locking groove g13 is opened at the end of the frame unit g11 with the insertion hole g422 and faces an end portion of the adjacent frame unit g11, so that the locking groove g13 can allow the locking elastic piece g12 of the adjacent frame unit g11 to be inserted through and interact with the locking flange g4231.

As shown in FIG. 1, in some embodiments, the frame unit g11 provided with the locking elastic piece g12 is provided with an outer frame handle g14.

Thus, the user can hold the outer frame handle g14 to press the locking elastic piece g12, facilitating the pressing of the locking elastic piece g12. At the same time, the arrangement of the outer frame handle g14 also improves the stability when the user installs and disassembles the fixing member g100, avoiding falling.

Specifically, the outer frame handle g14 may extend along a length direction of the frame unit g11, and the locking elastic piece g12 is located at an end side of the outer frame handle g14. When the user holds the outer frame handle g14, the thumb can be used to press the locking elastic piece g12, so that there is a good force point when pressing the locking elastic piece g12. At the same time, through this arrangement, the user can complete the actions of holding the fixing member g100 and pressing the locking elastic piece g12 with one hand at the same time, and the other hand only needs to press the unlocking push button g423 to complete the quick connection or separation of the frame unit g11, making the operation more convenient.

Referring to FIG. 1, FIG. 5, and FIG. 11, in some embodiments, the fixing member g100 further includes a preloading assembly g50. The preloading assembly g50 is provided on the outer frame g10, and the preloading assembly g50 can provide preloading pressure to the accommodating space g110.

Thus, during the installation of the fixing member g100, when the size of the accommodating space g110 inside the outer frame g10 is relatively loose relative to a cross-section of the frame, the preloading assembly g50 can provide a certain pressing force toward the frame to prevent the fixing member g100 from sliding down, facilitating the adjustment of the position of the clamping block g20.

Exemplarily, the preloading assembly g50 includes a preloading block g51 and a preloading spring g52. The preloading block g51 is located on the inner side of the outer frame g10. The preloading spring g52 is configured to elastically push the preloading block g51 inward, thereby realizing a solution of providing preloading pressure to the accommodating space g110.

Specifically, the preloading assembly g50 works and produces a preloading effect before the clamping block g20 is locked in the accommodating space g110, mainly configured to prevent the fixing member g100 from sliding downward due to its own gravity when the clamping block g20 fails to lock and clamp the frame.

Furthermore, the preloading block g51 may be provided inside the accommodating space g110 of the outer frame g10, and the preloading spring g52 is provided between the preloading block g51 and the outer frame g10. When the outer frame g10 is clamped on the frame, the preloading block g51 is pushed out toward the frame under the elastic action of the preloading spring g52, so that a certain friction force is generated between an inner wall of the accommodating space g110 and the frame, thereby preventing the fixing member g100 from sliding relative to the frame.

It should be noted that the preloading spring g52 squeezes the preloading block g51 so that the friction force formed between the inner side of the accommodating space g110 and the frame is greater than the gravity of the fixing member g100. At the same time, an elastic force of the preloading spring g52 squeezing the preloading block g51 is smaller than a clamping force of the clamping block g20. That is to say, the preloading assembly g50 mainly plays an auxiliary clamping role before the clamping block g20 is clamped, and a main clamping force of the fixing member g100 is a force generated by the adjusting and locking assembly g30 adjusting the clamping block g20 toward the inside of the accommodating space g110.

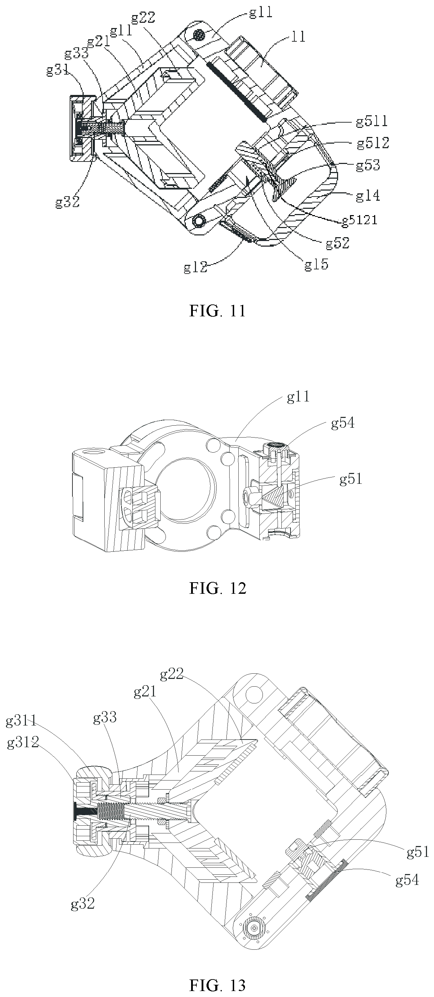

As shown in FIG. 11, in some embodiments, the outer frame g10 is provided with a sliding slot g15, and the preloading assembly g50 is slidably disposed in the sliding slot g15.

Thus, the preloading assembly g50 can adjust a position of releasing a preloading force into the accommodating space g110 by sliding in the sliding slot g15, so that the preloading assembly g50 can be squeezed with the frame at an appropriate position, avoiding loosening due to insufficient preloading.

Specifically, the sliding slot g15 is provided on the inner side of the outer frame g10, with an opening facing the inside of the accommodating space g110, and the preloading block g51 is slidably disposed in the sliding slot g15.

Furthermore, the preloading assembly g50 slides in the sliding slot g15 with damping, that is, the sliding of the preloading assembly g50 has a certain resistance, so that the user can more easily adjust the position of the preloading assembly g50 in the sliding slot g15, and can slide the preloading assembly g50 to the desired adjustment position more accurately.

As shown in FIG. 5 and FIG. 11, in some embodiments, the preloading block g51 may include a slider g512 and a pressing block g511. A pressing groove g5121 is formed inside the slider g512, with a groove opening facing the accommodating space g110. The pressing block g511 is movably disposed in the pressing groove g5121, and the preloading spring g52 is also assembled in the pressing groove g5121 and is located between the pressing block g511 and the bottom of the pressing groove g5121 to provide an elastic force for the pressing block g511 to be pushed out toward the accommodating space g110.

The slider g512 is slidably disposed in the sliding slot g15. A damping structure may be provided between the slider g512 and the sliding slot g15 to increase the friction force between the slider g512 and the sliding slot g15, preventing the preloading assembly g50 from sliding freely in the sliding slot g15 and affecting the preloading effect. For example, a plurality of protrusions and a plurality of corresponding recesses are respectively provided on surfaces where the slider g512 and the sliding slot g15 are in sliding contact. The present disclosure does not limit the damping structure.

As shown in FIG. 5 and FIG. 11, in some embodiments, the preloading assembly g50 further includes an unlocking handle g53, which is configured to pull the preloading block g51 or the preloading spring g52 outward to release the preloading pressure.

Thus, the preloading assembly g50 can release the preloading force of the preloading block g51 toward the accommodating space g110 by pulling the unlocking handle g53, facilitating the adjustment of the position of the fixing member g100 on the same frame, and also facilitating the disassembly and installation of the fixing member g100.

When the user needs to adjust the position on the same frame, after loosening the clamping block g20, the preloading assembly g50 has preloading force toward the frame to stabilize the fixing member g100, so that the fixing member g100 will have a certain resistance when moving on the frame. When the user wants to adjust the position of the fixing member g100 on the frame over a long distance, the user can pull up the preloading block g51 by the unlocking handle g53 to remove the preloading force, so that the fixing member g100 can move more smoothly on the frame.

When the user needs to disassemble the fixing member g100, due to the action of the preloading force, the quick-release structure g42 will also be tightened, and there will be a large friction force between the retractable pin g421 and the insertion hole g422, and then there will be a certain resistance when pressing the unlocking push button g423. At this time, the preloading block g51 can also be pulled up through the unlocking handle g53 to remove the preloading force, facilitating the disassembly of the fixing member g100.

Specifically, when the preloading assembly g50 is fixedly disposed on the outer frame g10, the unlocking handle g53 is movably disposed on the outer frame g10. When the preloading assembly g50 is slidably disposed on the outer frame g10, the unlocking handle g53 is movably disposed on the slider g512.

Referring to FIG. 5 and FIG. 11, in some embodiments, the outer frame g10 is further provided with an outer frame handle g14. The outer frame handle g14 and the preloading assembly g50 are located on the same side of the outer frame g10.

Thus, the user can use the outer frame handle g14 as a support point to pull the unlocking handle g53 to remove the preloading force. Specifically, when the user holds the outer frame handle g14, the user can pull the unlocking handle g53 with four fingers without performing additional operations on the unlocking handle g53, and can complete the actions of holding the outer frame handle g14 and pulling the unlocking handle g53 with one hand. The arrangement of the outer frame handle g14 also enables the user to better grasp the fixing member g100, improving usage safety.

Referring to FIG. 2 and FIG. 12, in some embodiments, the preloading assembly g50 further includes an unlocking button g54. A movement direction of the unlocking button g54 is different from a movement direction of the preloading block g51. At least one of the unlocking button g54 and the preloading block g51 is provided with a sliding wedge. The sliding wedge is configured to slide in contact with the other. When the unlocking button g54 is pressed, the preloading block g51 retracts.

Thus, the preloading assembly g50 can release the preloading force of the preloading block g51 toward the accommodating space g110 by pressing the unlocking button g54, facilitating the adjustment of the position of the fixing member g100 on the same frame. At the same time, the user can grasp the fixing member g100 while pressing the unlocking button g54, which is convenient for disassembly and installation of the fixing member g100. This solution provides another solution for unlocking the preloading assembly g50. Specifically, the unlocking button g54 may be provided on the outer frame g10, or on the frame unit g11.

Referring to FIG. 11 and FIG. 13, in some embodiments, the adjusting and locking assembly g30 includes an adjusting handle g31, an adjusting screw g32, and an adjusting nut g33. The adjusting handle g31 is rotatably disposed on the outer frame g10, one of the adjusting screw g32 and the adjusting nut g33 is connected to the adjusting handle g31, and the other is connected to the clamping block g20. The adjusting screw g32 and the adjusting nut g33 cooperate with each other. When one of the adjusting screw g32 and the adjusting nut g33 is fixed, rotating the other will change a distance between the adjusting screw g32 and the adjusting nut g33. Thus, by rotating the adjusting nut g33, the clamping block g20 can be moved away from or adjacent to the adjusting nut g33 to complete the adjustment. Furthermore, a self-locking thread may be used to achieve a locking effect after adjustment.

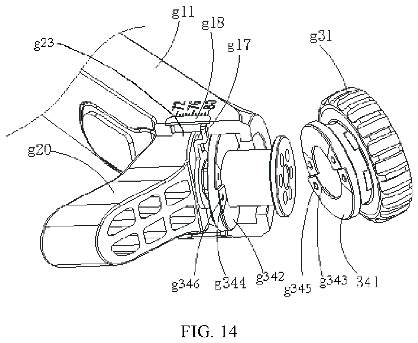

Referring to FIG. 2 and FIG. 14, in some embodiments, a mark g23 is provided on the clamping block g20, or on the adjusting nut g33 or the adjusting screw g32 connected to the clamping block g20. The outer frame g10 is provided with a scale g17 and an observation window g18, which are disposed corresponding to the mark g23. When the adjusting handle g31 is rotated, the clamping block g20 will be moved away or closer by the adjusting nut g33 and the adjusting screw g32, and the mark g23 connected to the clamping block g20 will move at the same time. By providing the scale g17 and the observation window g18 on the outer frame g10, the changes in the mark g23 can be intuitively observed inward, thereby providing guidance for the user.

Referring to FIG. 13 and FIG. 14, in some embodiments, the adjusting handle g31 includes an outer handle g311 and a protection block g312 which are coaxially arranged. An end face of the outer handle g311 in contact with the protection block g312 is provided with a plurality of first slopes g341 with circumferentially varying heights and a plurality of first steps g343, each connecting two adjacent first slopes. An end face of the protection block g312 in contact with the outer handle g311 is provided with a plurality of second slopes g342 and a plurality of second steps g344 corresponding to the plurality of first slopes g341 and the plurality of first steps g343, respectively. Assuming the first direction is a locking direction and a second direction is a loosening direction, the outer handle g311 is rotated along the first direction, and the outer handle g311 can push the second slope g342 of the protection block g312 through a friction force of the first slope g341, thereby driving the protection block g312 to rotate, and driving the adjusting screw g32 or the adjusting nut g33 to rotate, and at this time, the clamping block g20 moves inward. When the clamping block g20 locks the frame, the clamping block g20 cannot move inward, and the adjusting screw g32 and the adjusting nut g33 cannot move relative to each other, that is, the protection block g312 cannot rotate. At this time, the first slope g341 cannot drive the second slope g342 through the friction force. If the outer handle g311 continues to be rotated along the first direction with a force, sliding will occur between the outer handle g311 and the protection block g312, thereby achieving over-force protection. When the outer handle g311 is rotated along the second direction, the outer handle g311 directly acts on the second step g344 through the first step g343, thereby driving the protection block g312 to rotate and completing the unlocking.

Referring to FIG. 13 and FIG. 14, in some embodiments, one of the first slope g341 and the second slope g342 is provided with a positioning bead g345, and the other is provided with a positioning groove g346; or both the first slope g341 and the second slope g342 are provided with positioning beads g345 and positioning grooves g346 which are in one-to-one correspondence with those on the other slope. On one hand, the positioning bead g345 and the positioning groove g346 can generate a greater interaction force when the first slope g341 and the second slope g342 do not slide. On the other hand, when the first slope g341 and the second slope g342 slide, the positioning bead g345 and the positioning groove g346 can eliminate the sliding friction between the first slope g341 and the second slope g342, and prevent sliding wear between the first slope g341 and the second slope g342.

Referring to FIG. 5, in some embodiments, the outer frame g10 is provided with a guide groove g16, and part or all of the clamping block g20 is located in the guide groove g16. The guide groove g16 is configured to guide the clamping block g20 to slide and prevent the clamping block g20 from rotating. The guide groove g16 can also guide the clamping block g20 to make its sliding on the outer frame g10 smoother. In some embodiments, the outer frame g10 is composed of a plurality of interconnected frame units g11, and in this case, the guide groove g16 can be provided on the frame unit g11.

Referring to FIG. 5, in some embodiments, the clamping block g20 includes a pressing seat g21 and a replacement block g22; the pressing seat g21 is connected to the adjusting and locking assembly g30 and is movably disposed on an inner side of the outer frame g10; the replacement block g22 is detachably connected to the pressing seat g21. By adopting a modular design for the clamping block g20, users can replace the replacement block g22 in contact with the outer frame g10 by themselves, thereby improving the interchangeability and service life of the equipment.

Referring to FIG. 3 and FIG. 5, in some embodiments, there are at least two replacement blocks g22, and at least one of the shape or size of the replacement blocks g22 is different. Due to different user usage scenarios, the fixing member g100 may be fixed on frames with different cross-sectional shapes. Therefore, by equipping a plurality of replacement blocks g22 with different shapes, the user can choose a replacement block g22 with high adaptability according to his or her own scenario. Exemplarily, the replacement block g22 may be L-shaped, arc-shaped, angular, etc.

Referring to FIG. 1 and FIG. 2, in some embodiments, the outer frame g10 is provided with a first coupling seat 11. Optionally, the first coupling seat 11 is detachably mounted to the outer frame g10. In an embodiment, the first coupling seat 11 is configured to connect to a fitness device, a massage device, or other fixing members to meet installation requirements in more application scenarios.

Some embodiments provide a fixing member, which is mainly aimed at the installation and use of a conveniently detachable fitness device or massage device. Since there is no unified industry standard for the frames used to fix the fitness device in the current fitness device industry, each manufacturer's frame crossbars or other columns have no fixed standards for the length and width of the cross-section, which may result in the fitness device or massage device being unable to be installed on the frame for use. Some embodiments provide a fixing member, specifically a column fixing member, which can be adapted to frames of different sizes and models to facilitate the installation and use of the fitness device.

In the description of this specification, reference to terms such as "an embodiment", "some embodiments", "exemplary embodiments", "example", "specific example", or "some examples" means that specific features, structures, materials, or characteristics described in conjunction with the embodiment or example are included in at least one embodiment or example of the present disclosure. In this specification, the schematic expressions of the above terms do not necessarily refer to the same embodiment or example. Moreover, the specific features, structures, materials, or characteristics described may be combined in any suitable manner in any one or more embodiments or examples.

Although the embodiments of the present disclosure have been shown and described, those having ordinary skill in the art will appreciate that various changes, modifications, substitutions, and variations may be made to the embodiments without departing from the principles and intent of the present disclosure, and the scope of the present disclosure is defined by the claims and their equivalents.

## Claims

1. A fixing member, comprising:
an outer frame (g10), wherein an accommodating space (g110) is defined inside the outer frame (g10);
a clamping block (g20), wherein at least part of the clamping block (g20) is movably disposed on an inner side of the outer frame (g10);
an adjusting and locking assembly (g30), configured to adjust the position of the clamping block (g20) relative to the outer frame (g10) and lock the clamping block (g20).

2. The fixing member according to claim 1, wherein:
the outer frame (g10) comprises at least two frame units (g11) connected in sequence, adjacent frame units (g11) are connected to each other via a hinge structure (g41) or a quick-release structure (g42), and the at least two frame units (g11) are connected end to end in sequence and enclose the accommodating space (g110).

3. The fixing member according to claim 2,
wherein the quick-release structure (g42) comprises two retractable pins (g421) and two insertion holes (g422);
wherein the two retractable pins (g421) are provided at an end portion of a frame unit (g11) and are elastically ejected to the outside of the end portion of the frame unit (g11) in opposite directions;
wherein the two insertion holes (g422) are provided at an end portion of an adjacent frame unit (g11) and are arranged corresponding to the two retractable pins (g421); and
wherein a guide slope (g4211) is provided at an end portion of each of the two retractable pins (g421).

4. The fixing member according to claim 3,
wherein an unlocking push button (g423) is movably disposed in each insertion hole (g422) for abutting against the corresponding retractable pin (g421);
wherein the unlocking push button (g423) is configured to move between a first position and a second position;
wherein in the first position, the unlocking push button (g423) presses the retractable pin (g421) to retract; and
wherein in the second position, the unlocking push button (g423) contacts the retractable pin (g421) when the retractable pin (g421) is ejected.

5. The fixing member according to claim 4,
wherein one of the insertion hole (g422) and the unlocking push button (g423) is provided, on a sliding-interface surface between the insertion hole (g422) and the unlocking push button (g423), with a compression groove (g4232) extending in a generatrix direction and a rotation groove (g4233) extending in a circumferential direction;
wherein the compression groove (g4232) is in communication with the rotation groove (g4233);
wherein the other of the insertion hole (g422) and the unlocking push button (g423) is provided with a limiting protrusion (g19);
wherein the limiting protrusion (g19) is configured to slide in the compression groove (g4232) or the rotation groove (g4233); and
wherein, when the retractable pin (g421) is inserted into the insertion hole (g422), the limiting protrusion (g19) is located in the rotation groove (g4233).

6. The fixing member according to claim 4,
wherein the frame unit (g11) provided with the retractable pin (g421) is movably provided with a locking elastic piece (g12);
wherein a locking flange (g4231) is provided on a peripheral side of the unlocking push button (g423);
wherein, when the retractable pin (g421) is inserted into the insertion hole (g422), the locking elastic piece (g12) acts on the locking flange (g4231) and prevents the unlocking push button (g423) from pressing the retractable pin (g421);
wherein the frame unit (g11) provided with the insertion hole (g422) is provided with a locking groove (g13) in communication with the insertion hole (g422), and part of the locking elastic piece (g12) extends into the locking groove (g13); and
wherein the locking elastic piece (g12) is elastically biased to rotate toward the locking groove (g13) or the locking flange (g4231).

7. The fixing member according to claim 1, wherein the adjusting and locking assembly (g30) is configured to push the clamping block (g20) to move by rotating a screw;
wherein the fixing member further comprises a preloading assembly (g50) provided on the outer frame (g10) and configured to provide preloading pressure to the accommodating space (g110);
wherein the preloading assembly (g50) comprises a preloading block (g51), a preloading spring (g52), and an unlocking handle (g53);
wherein the preloading spring (g52) is configured to elastically push the preloading block (g51) into the accommodating space (g110), and the unlocking handle (g53) is configured to pull the preloading block (g51) or the preloading spring (g52) outwardly from the accommodating space (g110).

8. The fixing member according to claim 7, wherein the outer frame (g10) is provided with a sliding slot (g15), and the preloading assembly (g50) is slidably disposed in the sliding slot (g15);
wherein the preloading assembly (g50) is configured to slide in the sliding slot (g15) with damping.

9. The fixing member according to claim 7, wherein:
the outer frame (g10) is provided with an outer frame handle (g14), and the outer frame handle (g14) and the preloading assembly (g50) are located on the same side of the outer frame (g10).

10. The fixing member according to claim 1, wherein the adjusting and locking assembly (g30) comprises an adjusting handle (g31), an adjusting screw (g32), and an adjusting nut (g33);
wherein the adjusting handle (g31) is rotatably disposed on the outer frame (g10);
wherein one of the adjusting screw (g32) and the adjusting nut (g33) is connected to the adjusting handle (g31), and the other is connected to the clamping block (g20).

11. The fixing member according to claim 10, wherein a mark (g23) is provided on one of the clamping block (g20), the adjusting nut (g33), and the adjusting screw (g32);
wherein the outer frame (g10) is provided with a scale (g17) and an observation window (g18); and
wherein the scale (g17) and the observation window (g18) are disposed corresponding to the mark (g23).

12. The fixing member according to claim 10, wherein the adjusting handle (g31) comprises an outer handle (g311) and a protection block (g312) which are coaxially arranged;
wherein an end face of the outer handle (g311) in contact with the protection block (g312) is provided with a plurality of first slopes (g341) with circumferentially varying heights and a plurality of first steps (g343), each connecting two adjacent first slopes (g341); and
wherein an end face of the protection block (g312) in contact with the outer handle (g311) is provided with a plurality of second slopes (g342) and a plurality of second steps (g344) corresponding to the plurality of first slopes (g341) and the plurality of first steps (g343), respectively.

13. The fixing member according to claim 12, wherein one of the plurality of first slopes (g341) and the plurality of second slopes (g342) is provided with a positioning bead (g345), and the other is provided with a positioning groove (g346); or
wherein both the plurality of first slopes (g341) and the plurality of second slopes (g342) are provided with positioning beads (g345) and positioning grooves (g346), and wherein the positioning beads (g345) and the positioning grooves (g346) on the first slopes (g341) are in one-to-one correspondence with the positioning grooves (g346) and the positioning beads (g345) on the second slopes (g342), respectively.

14. The fixing member according to claim 1, wherein the outer frame (g10) is provided with a guide groove (g16);
wherein at least part of the clamping block (g20) is located in the guide groove (g16); and
wherein the guide groove (g16) is configured to guide the clamping block (g20) to slide and prevent the clamping block (g20) from rotating.

15. The fixing member according to claim 1, wherein the clamping block (g20) comprises a pressing seat (g21) and at least one replacement block (g22);
wherein the pressing seat (g21) is connected to the adjusting and locking assembly (g30) and is movably disposed on the inner side of the outer frame (g10);
wherein the replacement block (g22) is detachably connected to the pressing seat (g21); and
wherein when there are at least two replacement blocks (g22), at least one of a shape or a size of the at least two replacement blocks (g22) is different.
